# EUROPEAN PATENT SPECIFICATION

(11) **EP 4 145 258 B1**
(45) Date of publication and mention of the grant of the patent: **29.10.2025**
(21) Application number: 22193058.9
(22) Date of filing: 31.08.2022
(51) Int. Cl.: G06F 3/0482, A47J 43/00, G06F 3/04842, G06F 3/04845

(54) **METHOD FOR PREPARING A DIGITAL LIST OF FOOD INGREDIENTS AND METHOD FOR IDENTIFYING A LIST OF RECIPES CORRESPONDING TO A PLURALITY OF FOOD INGREDIENTS**
VERFAHREN ZUM HERSTELLEN EINER DIGITALEN LISTE VON NAHRUNGSMITTELBESTANDTEILEN UND VERFAHREN ZUM IDENTIFIZIEREN EINER LISTE VON REZEPTUREN ENTSPRECHEND EINER VIELZAHL VON NAHRUNGSMITTELBESTANDTEILEN
PROCÉDÉ DE PRÉPARATION D'UNE LISTE NUMÉRIQUE D'INGRÉDIENTS ALIMENTAIRES ET PROCÉDÉ D'IDENTIFICATION D'UNE LISTE DE RECETTES CORRESPONDANT À UNE PLURALITÉ D'INGRÉDIENTS ALIMENTAIRES

(30) Priority: 02.09.2021 IT 202100022754
(43) Date of publication of application: 08.03.2023
(73) Proprietor: Candy S.p.A., 20052 Monza (MB) (IT)
(72) Inventor: SERGI, Leonardo, 20900 Monza, MONZA E BRIANZA (IT); MARINO, Nicola, 20900 Monza, MONZA E BRIANZA (IT); GERETTI, Giammaria, 20900 Monza, MONZA E BRIANZA (IT)
(74) Representative: Leihkauf, Steffen Falk

(56) References cited:
- EP-A1- 3 509 014
- US-A1- 2019 001 288
- US-A1- 2021 049 422

## Description

### TECHNOLOGICAL BACKGROUND OF THE INVENTION

### Field of application.

The present invention generally relates to the technical field of support/assistance services for a user for cooking food, such services using electronic processing, and being accessible by means of software applications (apps) which can be executed by user devices, e.g., smartphones.

More in particular, the invention relates to methods, based on electronic processing, for preparing a digital list of food ingredients and for identifying a list of recipes corresponding to a plurality of food ingredients.

### Description of the prior art.

It is well known that the increasingly pervasive availability of software applications (apps) which can be executed on smartphones is increasing the collection of at least partly automated functions accessible to the users of such devices.

In the technical field of support/assistance services for users for cooking food, this is reflected in the recently emerged availability of apps that allow a user to take a photograph of a food ready to be cooked, automatically recognizing the food and providing cooking suggestions or even commands to the electric cooking appliance.

EP3509014 discloses a training scheme that is used to train a neural network to identify food ingredients within a video feed. For example, a mobile application may provide recipe suggestions to a user based on a list of ingredients that the user has available.

However, in this context, users' requirements are continuing to grow, and it is increasingly important for suppliers of cooking support/assistance services (typically, manufacturers of household appliances) to offer solutions that fulfil these new and growing requirements.

For example, the need is perceived to allow users to recognize, using smartphones and apps, not only food ready to cook, but also a plurality of basic ingredients for foods. Based on this, it would be desirable to provide users with a digital list of ingredients, quickly and automatically, and which is at the same time controllable and correctable by the user.

The known solutions, mentioned briefly above, do not fully meet such needs. In fact, although it is possible in theory to perform the functions of the aforesaid apps various times in sequence for recognizing a food, the user is obliged to understand the logics of the app in order to try to correct the results. This leads to a long and time-consuming process, which is also complicated for the user who needs to intervene several times, starting again, in order to check or confirm or correct the automatic recognition, to the extent that this solution actually becomes impractical.

Moreover, other technical problems need to be solved, in order to reach a solution which can be used easily and conveniently by the user: for example, how to overcome the fact that the images taken by the user may not be optimal (e.g., taken from uncommon angles, or in conditions where the ingredient or food in a peripheral position of the image) to achieve the subsequent recognition, leading to possibly high error rates in the recognition thereof. In association with the requirement mentioned above, it would also be desirable, after the generation of a digital list of ingredients, to be able to provide the user with recipes connected with the recognized ingredients, in addition to cooking tips and/or commands for the cooking appliance which are optimized in order to obtain a recipe selected from those suggested.

For the reasons disclosed above, the aforementioned known solutions do not allow fully meeting the needs mentioned above.

The U.S. patent application US 2019/001288 A1 describes an intelligent blending system, with a user device that communicates with a blender base.

### SUMMARY OF THE INVENTION

It is the object of the present invention to provide a method for preparing a digital list of food ingredients based on an assisted interaction with a user, which allows at least partially overcoming the drawbacks complained above with reference to the prior art, and responding to the aforementioned needs particularly felt in the technical field considered. This object is achieved by a method according to claim 1.

Further embodiments of such a method are defined in claims 2-6.

It is a further object of the present invention to provide a method for identifying a list of recipes corresponding to a plurality of food ingredients, which is based on the results of the aforesaid method of preparing a digital list of ingredients.

This object is achieved by a method according to claim 7.

Further embodiments of such a method are defined in claims 8-10.

The present invention also relates to a method for controlling an apparatus for cooking a food, based on recipes identified by the aforesaid method of identifying a list of recipes. Such a system is defined in claim 11.

It is a further object of the present invention to provide a method for using/controlling a refrigeration apparatus, based on the results of the aforesaid method for preparing a digital list of ingredients. Such an object is achieved by a method according to claim 12 or claim 13.

### BRIEF DESCRIPTION OF THE DRAWINGS

Further features and advantages of the methods and systems according to the invention will become apparent from the following description of preferred embodiments, given by way of indicative and non-limiting example, with reference to the accompanying drawings, in which:
- figure 1 diagrammatically shows a block diagram of a method, according to an embodiment of the invention, for preparing a digital list of food ingredients, based on an assisted interaction with a user;
- figure 2 diagrammatically shows a block diagram of a method for identifying and presenting a list of recipes, according to an embodiment of the invention;
- figure 3 shows some exemplary screen shots of an interface of the user device, while carrying out an embodiment of the method for preparing a digital list of food ingredients, and some steps of the interaction with the user included by such a method;
- figure 4 shows a block diagram of some exemplifying features of trained algorithm models for the classification of the recognized objects.

### DETAILED DESCRIPTION

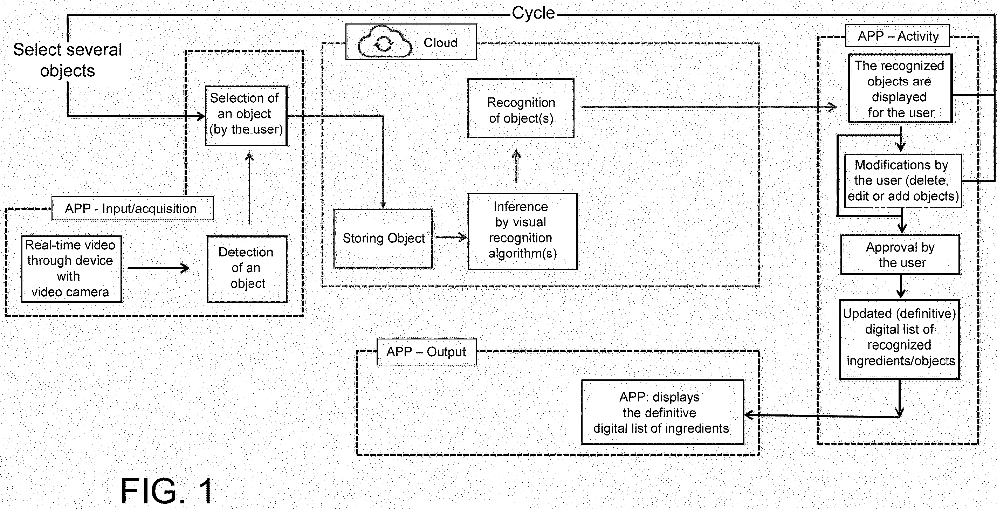

With reference to figure 1, a method for preparing a digital list of food ingredients based on an assisted interaction with a user is described.

The method comprises the steps of acquiring at least one digital video stream of one or more respective food ingredients by means of a user device, and interacting with the aforesaid at least one digital video stream, by the user by means of the user device, to select in the digital video stream at least one digital image of each of said one or more food ingredients which are desired to be included in the digital list of ingredients.

The method then includes recognizing, through electronic processing means, a plurality of ingredients based on the at least one respective digital image selected by the user in the digital video stream; and preparing, through electronic processing means, a suggested digital list of ingredients, comprising the list of one or more recognized ingredients by means of image recognition.

The method then comprises the steps of providing the aforesaid suggested digital list of ingredients to the user, through a digital interface of the user device; and confirming and/or correcting, by the user, through said digital interface of the user device, the aforesaid suggested digital list of ingredients, to prepare a definitive digital list of ingredients.

According to an embodiment of the method, the acquiring step comprises acquiring a digital video stream framed in real-time by the user, wherein the user sequentially frames a plurality of ingredients desired to be included in the digital list of ingredients.

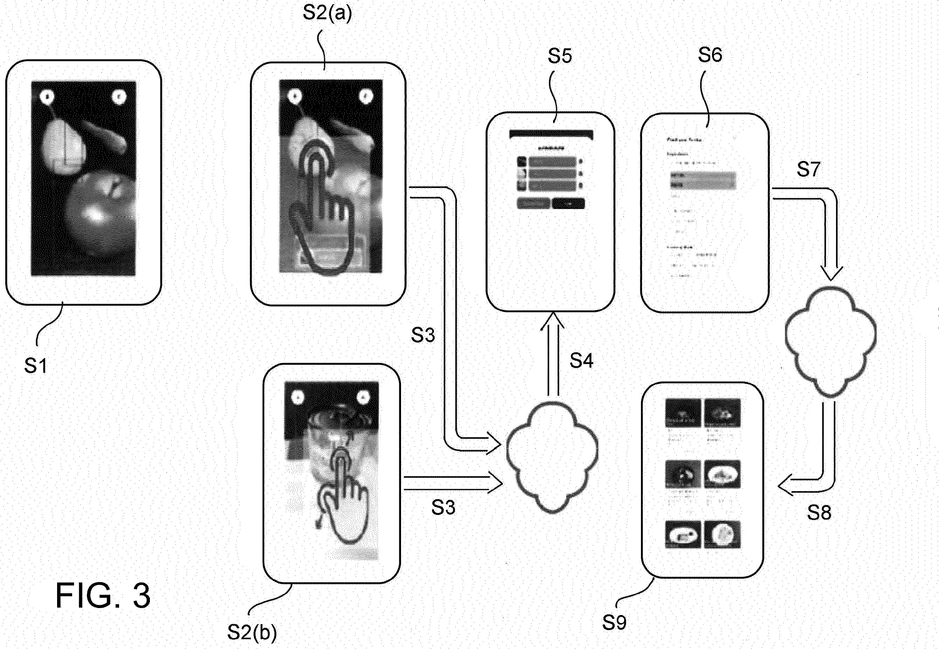

According to an embodiment of the method (some aspects of which are shown for example in figure 3), the step of interacting with the digital video stream comprises assisting the user by superimposing on the digital video boxes or frames or masks or signs which highlight parts of the frame associated with respective ingredients; and then indicating, by the user, by selecting said boxes or frames or masks or signs, the parts of the video stream corresponding to the ingredients to be recognized, so as to select the digital images of the ingredients to be included in the list of ingredients.

According to an implementation option, the aforesaid step of assisting the user comprises recognizing, by a video/image analysis algorithm, parts of the frame which, with high probability, represent candidate ingredients; and then assisting the user by superimposing on the digital video said boxes or frames or masks or highlighting signs on said parts of the frame recognized as relevant.

According to an implementation option, the aforesaid step of recognizing parts of the frame which probably represent candidate ingredients is carried out by the user device and the aforesaid video/image analysis algorithm is implemented by means of software executed by the user device.

According to an implementation option, the aforesaid step of indicating, by the user, the parts of the video stream corresponding to the ingredients to be recognized comprises identifying an area of the video frame to be analyzed by a haptic interaction, by the user, suitable to highlight an area containing a candidate ingredient.

Several possible implementation variants can be provided by the method concerning the user selection mode of the image or video frame or frame to be analyzed: for example, touching the touch screen of the user's device on the box or frame or mask or sign, shown by the touch-screen itself; or maintaining the frame captured by the user device for a predetermined amount of time, keeping the frame or mask shown by the touch-screen in the center; or, when the user has identified the area by the aforesaid haptic interaction, the identified area is automatically selected as an image to be analyzed.

In this respect, figure 3 is considered by way of example, in which the following steps of the method are shown:
S1: detection of an object in the image;
S2(a): selection of the object by the user by touch;
S2(b): selection of the object by the user through another haptic movement suitable to highlight an area of the image;
S3: transfer of data towards remote cloud processing;
S4: receipt of data from the remote processor (ingredient identified in the image);
S5: display of the latest results obtained from the classification of the images transmitted to the remote processor;
S6: application of recipe configurations;
S7: transfer of data towards remote cloud processing;
S8: receipt of data from the remote processor;
S9: display of the received information to the user (list of relevant recipes identified).

According to an embodiment of the method, the aforesaid step of recognizing parts of the frame which, with high probability, represent candidate ingredients is performed by one or more video/image analysis algorithms, based on artificial intelligence techniques and/or trained algorithms and/or machine learning.

According to an implementation option, the aforesaid artificial intelligence techniques and/or trained algorithms and/or machine learning comprise trained algorithms for detecting objects in an image (also known as object detection algorithms).

According to an embodiment of the method, the aforesaid step of recognizing a plurality of ingredients comprises transmitting to remote processing means the digital images which the user, within the digital video stream, has selected; and then performing on each of such digital images an image recognition procedure based on artificial intelligence techniques and/or trained algorithms and/or machine learning.

According to an implementation option, the aforesaid artificial intelligence techniques and/or trained algorithms and/or machine learning comprise trained algorithms for recognizing objects from an image (also commonly known as image classification algorithms).

According to possible embodiments, the aforesaid trained image object detection and/or recognition algorithms comprise trained deep neural networks.

Some examples of artificial intelligence techniques and/or trained algorithms and/or machine learning will be disclosed herein below by way of non-limiting example, which can be used in the method of the present invention, for the purposes indicated above.

As already pointed out, such artificial intelligence and/or machine learning techniques can be applied, in the method disclosed herein, to both object detection algorithms, having the function of identifying objects to be analyzed in an image, and image classification algorithms, having the function of recognizing the identified object, i.e., in other words, classifying such an object - e.g., ingredient - as corresponding to one of a predefined set of recognizable objects (in the case in hand, ingredients).

As already noted, according to an embodiment of the method, the identification of possible candidates for the recognition of the food is carried out through object detection algorithms, i.e., detection of objects in an image or in a video frame based on deep neural networks.

According to possible embodiments, such deep neural networks comprise one of the following deep neural networks (known in themselves in the technical context considered): [R-CNN], [Fast R-CNN], [Faster R-CNN], [YOLOv1], [YOLOv2], [YOLOv3], [YOLOv4], [SSD], [DSSD].

Such neural networks for detecting objects are trained on several million images of different objects and then they are refined to better adapt to the purpose of the particular project.

Such a refining is said to be "supervised" because, in order to define the best configuration of parameters, a cost function is used which numerically represents the difference between the prediction that the network generates, and the real value (known as label), provided as input to the optimization algorithm.

According to an embodiment of the present method, a trained network on a set of images split into 80 classes, has been refined to allow identifying only the two classes of "loose food" and "packaged food".

According to other embodiments, a division into a larger subset of the aforesaid 80 classes is performed.

According to a particular implementation option, the object detection algorithm is optimized to operate on a mobile device and requires, as input, the video stream scaled to 224x224 pixels.

In accordance with a preferred implementation option, the object detection algorithm is executed by the user device to reduce delays or lags in image transmission to a remote processing entity (e.g., a backend cloud).

Now with reference to image classification, as already observed, according to an embodiment of the method, the recognition of the food category is carried out through classification algorithms based on deep neural networks.

Such algorithms are able to analyze an image, provided as input to the algorithm, and recognize the main object framed in the image by breaking it down into increasingly representative details of the object to be recognized. For example, at a first level, segments are identified at different angles, then more of these segments are combined to represent curves and so on.

The neural networks for classification are also trained on several millions of images of different objects. The training is naturally carried out by providing the neural network with objects to recognize and at the same time the information as to which object it is (within a predefined set of recognizable objects).

Also in this case, according to an implementation option, a "supervised" refining process is carried out, as already described above.

According to an implementation variant, before this supervised training step, a self-supervised training step is used in the method. In such a self-supervised training, the outputs of the neural network, seen as dots in a high dimensional vector space (from 100 to 1000 coordinates), are arranged to be close to one another, according to an appropriate distance function (e.g., a Euclidean function or a cosine function), if the two corresponding inputs are in the same category.

The use of these techniques advantageously allows pre-sorting the outputs of the network in this vector space (known as "latent space") without forcing, in this step, the optimization of the accuracy, which could be biased by the unbalanced number of details that can be extracted from the images.

To obtain this result, contrast training techniques are also used, in which, at every parameter optimization cycle, the set of training images needs to be re-sorted, to present to the cost function the output of the data network from images of the same or different class.

Such a re-sorting can be obtained with both a comparison of one to all, and a comparison of three images at a time, two of which are from the same class and one from a different class.

The neural network thus optimized is not yet able to provide a class index as output.

Therefore, according to an implementation option of the method, in order to obtain the same output as would be expected from a classifier, a neural network which is not very deep is added, and only the supervised training of the additional network is carried out. The combined use of latent space and the not very deep network, as known in literature, allows greater generalization of the classification.

According to an embodiment of the method, in parallel to the aforesaid classification network, a second classification network is used, trained on macro-categories of food (e.g., meat, fish, etc.) so that the output of this further sub-network can increase the context information provided to the classification network. The output of this network is used as input to the classification networks of the individual ingredients, so that they can exploit this context information to improve the classification accuracy.

The network thus also remains modular, having the possibility to add ingredient classes, by adding a new classification network which has as input the latent space and the output of the macro-category classifier.

The overall algorithm comprises several million parameters and, thus, needs a powerful calculation system for its execution.

For this reason, according to a preferred embodiment, the trained image classification algorithm is executed in remote processing means (therefore not by the user device and the local installed app), for example in a cloud.

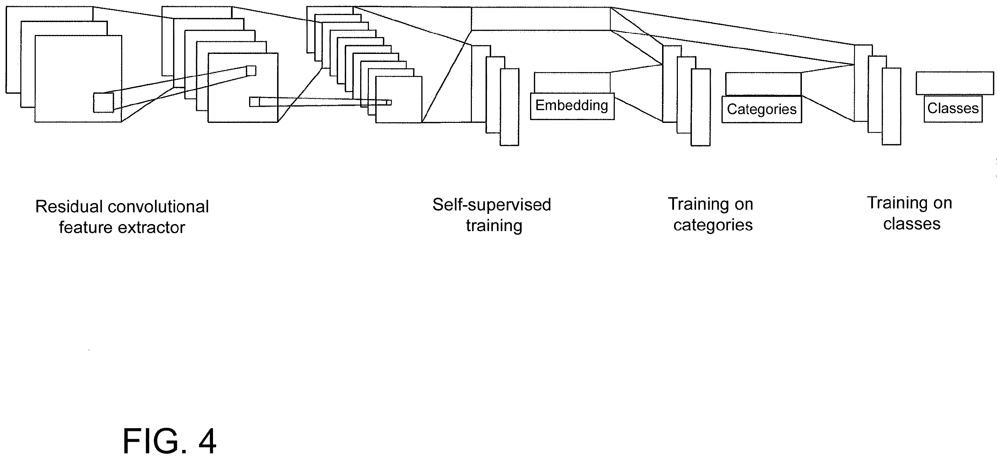

Some exemplifying features of trained object classification algorithms are shown in figure 4. Such a figure shows sequences of neural network layers, which perform different functions, split into functional blocks.

To the left of the figure, the structure of a feature extractor is shown, which receives as input a digital representation of the image to be analyzed; such a sub-network is selected based on the performance obtained, but it is not trained. A type of network with excellent performance uses convolutional layers for processing. A further feature which improves performance is the fact of being residual, i.e., transferring features as such, relating to outermost layers towards deeper layers, in an unaltered state, thus generating more robust responses for images with different scale factors.

The output of the first sub-network is sent as input to a not very deep network, e.g., a network of the "multi-layer perceptron" type, which deals with reorganizing the extracted features into what is defined, herein and in figure 4, as "embedding" (representation of input images in the latent space). The training of this network is obtained in a self-supervised manner: rather than using the individual images, several images are presented simultaneously to the network, in an attempt to bring the representations of images relating to the same class towards one another in the latent space.

The features and the embedding are then used as input to a further not very deep network, e.g., of the "multi-layer perceptron" type, which has the task of classifying the macro-categories. This network is trained in a supervised manner, using the macro-category label as an objective to be presented as output.

The features, embedding and macro-categories are then passed to the final not very deep network, e.g., of the "multi-layer perceptron" type, which has the task of classifying the categories. This network is trained in a supervised manner, using the category label as an objective to be presented as output.

It is to be noted that, according to other embodiments of the method, other trained algorithms can be used, with other training procedures, known in themselves.

According to a further embodiment, the method further comprises, after the recognizing step, the further step of estimating the quantity of recognized ingredient present in the image.

According to another embodiment, the method further comprises the step of transmitting further information to the remote electronic processing means, through the user device configured to communicate with the aforesaid remote processing means.

The aforesaid further information is entered by the user through the interface of the user device and comprises additional non-framed ingredients that the user desires to be included in the list, and/or additional information about the framed ingredients.

According to an implementation option, the aforesaid further information about the framed ingredients comprises the quantity and/or product identifier and/or type of the framed ingredient.

According to an implementation option, the aforesaid further information is provided by the user as text through the user device interface.

According to another implementation option, the aforesaid additional information is sent in the form of additional acquired images, e.g., images of a product package.

Such further acquired images are processed, e.g., by means of OCR, to infer readable information about the product and/or product packaging.

According to an embodiment of the method, the aforesaid step of confirming and/or correcting the digital list, by the user, comprises editing the digital list, by means of the user device interface, to add and/or remove and/or correct the ingredients present in the list.

A method for identifying a list of recipes corresponding to a plurality of food ingredients is described herein below.

Such a method includes performing a method for preparing a digital list of food ingredients according to any one of the embodiments previously described.

Next, such a method comprises the steps of associating, by the electronic processing means, the aforesaid definitive list of ingredients with one or more recipes containing one or more of the ingredients on said list; and selecting and/or establishing a priority among said recipes based on a comparison of the number and/or quantity of ingredients in the recipe to the number and/or quantity of ingredients in the definitive list of ingredients.

According to an implementation option, the aforesaid method comprises the further step of providing the user, through the user device interface, with a list of recipes, comprising the selected and/or prioritized recipes.

According to an implementation option, such a method further comprises choosing, by the user, a recipe from the list of recipes by means of the interface of the user device and then transmitting, through the user device, parameters associated with the chosen recipe to an apparatus configured to cook food.

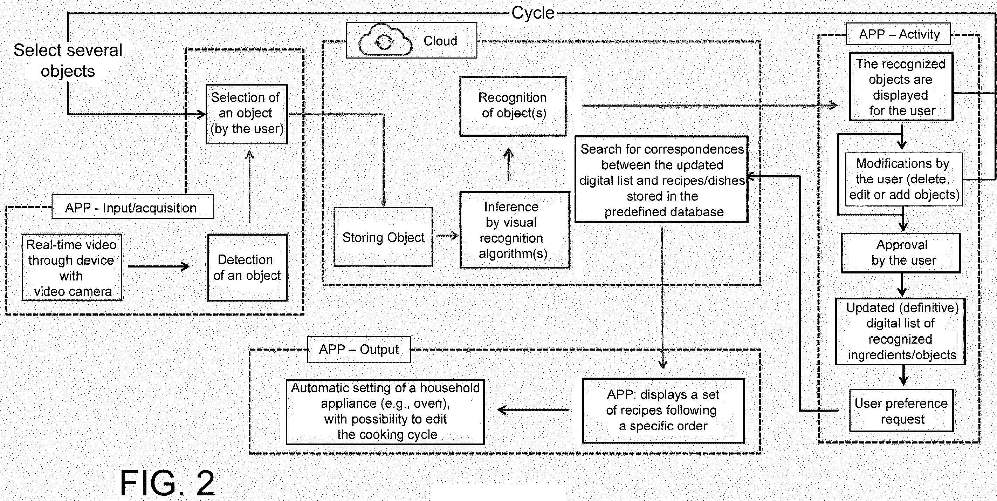

Such an implementation option is shown in figure 2.

According to an implementation option, the aforesaid associating step comprises associating the definitive list of ingredients to one or more recipes stored in a recipe database accessible by the remote processing means.

According to an embodiment, the step of selecting and/or establishing a priority comprises selecting and/or establishing a higher priority for the stored recipes which have the greatest number of ingredients in common with the definitive list of ingredients.

According to an implementation option, in which the stored recipes comprise a main ingredient and a secondary ingredient, the aforesaid step of selecting and/or establishing a priority comprises sorting the list of recipes by highlighting in first place, with the highest priority, the recipes for which both the primary and secondary ingredients are on the definitive list of ingredients, then putting in second place the recipes for which only the primary ingredient is on the definitive list of ingredients, putting in third place the recipes for which only the secondary ingredient is on the list, and finally putting, with the lowest priority, all the recipes for which there is superimposition between the ingredients in the recipe and the ingredients in the definitive list of ingredients.

According to an embodiment, the selected recipes provided to the user are sorted according to the established priority.

According to an embodiment, the selected recipes provided to the user comprise cooking parameters and/or information on how to cook the recipe.

According to an embodiment, the aforesaid method comprises, before the step of providing the user with the list of recipes, the further step of filtering the recipes according to a predetermined criterion, generating a filtered list of recipes. In this case, the providing step comprises providing the filtered list of recipes to the user.

According to different possible embodiments, the aforesaid predetermined criterion is relative to the course and/or occasion and/or intolerance and/or cooking time and/or difficulty of realization.

According to an embodiment of the aforesaid methods, the user device is a smartphone, provided with a camera, an interface (e.g., touch type) and a local processor in which a software application (app) is stored and executed. Such a software app is configured to carry out the aforesaid steps of acquiring digital images and/or videos, allowing the user to confirm and/or correct the list of ingredients, showing the list of recipes to the user, allowing the user to transmit the parameters associated with the recipe to the apparatus for cooking the food.

According to an embodiment of the aforesaid methods, the aforesaid remote processing means are cloud processing means, comprising hardware and software configured to perform the aforesaid steps of: recognizing the plurality of ingredients based on the at least one digital image, preparing and providing to the user an automatically suggested digital list of ingredients, receiving from the user the definitive digital list of ingredients, associating the definitive list of ingredients with one or more recipes, selecting and/or establishing a priority among recipes, providing to the user, the list of selected and/or prioritized recipes.

A method of controlling a cooking apparatus for cooking food is now described.

Such a method includes performing a method for identifying a list of recipes corresponding to a plurality of food ingredients according to any one of the embodiments previously disclosed.

Such a method then comprises the steps of filtering the selected recipes provided to the user, based on cooking parameters and/or information on how to cook the recipe, then choosing, by the user, a recipe from the list of recipes by means of the interface of the user device; and then transmitting, through the user device, parameters associated with the chosen recipe to an apparatus configured to cook food.

A method for using/controlling a refrigeration apparatus (in particular, a food refrigeration apparatus, for example a refrigerator) is now described.

Such a method includes performing a method for preparing a digital list of food ingredients according to any one of the embodiments of the method for preparing a digital list of food ingredients previously disclosed.

Such a method then comprises the following steps:
- for every ingredient included in the aforesaid definitive digital list of ingredients, determining, by a user device or remote processing means, based on information and/or correlations previously stored, a respective ideal position in a refrigerator compartment, adapted to allow optimal preservation;
- suggesting the aforesaid determined ideal respective position to the user, by an interface of the user device

According to an implementation option, such a method further comprises the step of allowing the user, through the interface of the user device, to access a database in which the ingredients of the list and the respective position in the refrigerator are stored, so that the user can obtain information on what is stored in the refrigerator.

According to an implementation option, such a method further comprises the steps of configuring the temperature of the refrigerator compartments based on the combinations of ingredients which are positioned therein and, in case of incompatibility, suggesting to the user to separate and place in different compartments ingredients whose positioning is mutually incompatible.

A system according to the present invention is now described, which is configured to perform the aforesaid methods of preparing a digital list of ingredients for identifying a resulting list of recipes.

Such a system comprises at least one user device and remote processing means, operatively connected to the user device through a telecommunications network.

According to an embodiment of the system, the user device is a smartphone, provided with a camera, an interface (e.g., touch type) and a local processor in which a software application (app) is stored and executed. Such a software app is configured to carry out the aforesaid steps of acquiring digital images and/or videos, allowing the user to confirm and/or correct the list of ingredients, showing the list of recipes to the user, allowing the user to transmit the parameters associated with the recipe to the apparatus for cooking the food.

According to an embodiment of the system, the aforesaid remote processing means are cloud processing means, comprising hardware and software configured to perform the aforesaid steps of: recognizing the plurality of ingredients based on the at least one digital image, preparing and providing to the user an automatically suggested digital list of ingredients, receiving from the user the definitive digital list of ingredients, associating the definitive list of ingredients with one or more recipes, selecting and/or establishing a priority among recipes, providing to the user, the list of selected and/or prioritized recipes.

According to an implementation option, the cloud processing means comprise one or more servers operatively connected to one another.

According to an implementation option, a first server is configured to carry out the image classification functions, and a second server is configured to carry out the function of selecting and sorting the recipes available in a database and associable with the recognized ingredients.

According to an embodiment, the system further comprises a household appliance, adapted to cook the food, operatively connected to the user device for receiving parameters and/or commands associated with the recipe through the aforesaid method for identifying recipes, and configured to heat or cook the food according to the parameters and/or commands received.

It is worth noting that the object of the present invention is fully achieved by the methods and the system disclosed above by virtue of the functional and structural features thereof.

In fact, the method of preparing a digital list of ingredients shown above allows the user to recognize, through a smartphone and app, a plurality of basic ingredients for foods, and to assemble a resulting digital list of ingredients, in a quick and assisted manner, allowing easy control and correction of the results of the algorithm by the user.

Moreover, by virtue of the assisted interaction with the digital video stream, the user can easily and quickly select a plurality of images of ingredients, also within a single video, and even providing different aids for selecting relevant parts of frame to be analyzed, containing the images of the ingredients to be included in the list, and then for improved acquisition of the images (which also leads to improved precision of the subsequent recognition).

Additionally, as disclosed above, the method advantageously allows the user to operate a control and a cumulative check on the suggested digital list of ingredients, in order to generate a definitive list, through a simple and quick interaction.

Based on the aforesaid method for preparing a digital list of ingredients, the invention also allows providing an effective method for identifying recipes, based on the correlations previously shown between the list of ingredients and a set of stored recipes.

Finally, the user is given the possibility to receive cooking tips related to selected recipes, and/or to automatically send commands for the cooking appliance which are optimized for obtaining the recipe selected from those suggested.

All the features described above as belonging to one possible embodiment can be implemented irrespective of the other described embodiments.

## Claims

1. A method for preparing a digital list of food ingredients based on an assisted interaction with a user, comprising:
- acquiring at least one digital video stream of one or more respective food ingredients by means of a user device;
- interacting with said at least one digital video stream, by the user by means of the user device, to select in the digital video stream at least one digital image of each of said one or more food ingredients desired to be included in the digital list of ingredients;
- recognizing, through electronic processing means, a plurality of ingredients based on the at least one respective digital image selected by the user in the digital video stream;
- preparing, through electronic processing means, a suggested digital list of ingredients, comprising a list of one or more ingredients recognized by means of image recognition;
- providing said suggested digital list of ingredients to the user, through a digital interface of the user device;
- confirming and/or correcting, by the user, through said digital interface of the user device, said suggested digital list of ingredients, to prepare a definitive digital list of ingredients,
wherein said acquiring step comprises acquiring a digital video stream framed in real-time by the user, wherein the user sequentially frames a plurality of ingredients which are desired to be included in the digital list of ingredients,
wherein the step of interacting with the digital video stream comprises:
- assisting the user by superimposing, on the digital video, boxes or frames or masks or signs which highlight parts of the frame associated with respective ingredients;
- indicating, by the user, by selecting said boxes or frames or masks or signs, the parts of the video stream corresponding to the ingredients to be recognized, so as to select the digital images of the ingredients to be included in the list of ingredients,
wherein the step of assisting the user comprises:
- recognizing, by a video/image analysis algorithm, parts of the frame which, with high probability, represent candidate ingredients;
- assisting the user by superimposing, on the digital video, said boxes or frames or masks or highlighting signs on said parts of the frame recognized as relevant;
wherein said step of recognizing parts of the frame is carried out by the user device and said video/image analysis algorithm is implemented by means of software executed by the user device, and/or
wherein said step of recognizing parts of the frame which, with high probability, represent candidate ingredients is performed by one or more video/image analysis algorithms, based on artificial intelligence techniques and/or trained algorithms and/or machine learning, wherein said artificial intelligence techniques and/or trained algorithms and/or machine learning comprise trained algorithms for detecting objects in an image.

2. A method according to claim 1, wherein said indicating step comprises:
- identifying an area of the video frame to be analyzed through a haptic interaction, by the user, suitable to indicate an area containing a candidate ingredient.

3. A method according to any one of the preceding claims, wherein the step of recognizing a plurality of ingredients comprises:
- transmitting to remote processing means the digital images that the user has selected in the digital video stream;
- performing on each of said digital images an image recognition procedure based on artificial intelligence techniques and/or trained algorithms and/or machine learning,
wherein said artificial intelligence techniques and/or trained algorithms and/or machine learning comprise trained algorithms for recognizing objects from images,
and/or said trained image object detection and/or recognition algorithms comprise trained deep neural networks.

4. A method according to any one of the preceding claims, further comprising, after the recognizing step, the further step of estimating the quantity of recognized ingredient present in the image.

5. A method according to any one of claims 1-4, further comprising the step of transmitting further information to the remote electronic processing means, through the user device configured to communicate with said remote processing means, said further information being entered by the user through the interface of the user device,
wherein said additional information comprises additional non-framed ingredients that the user desires to be included in the list,
and/or wherein said further information about the framed ingredients comprises quantity and/or product identifier and/or type of the framed ingredient;
and/or wherein said further information is entered by the user through the interface of the user device,
and/or wherein said further information is sent in the form of further acquired images, e.g., images of a product package, said further acquired images being processed, e.g., by means of OCR, for deducing legible information on the product and/or product package.

6. A method according to any one of the preceding claims, wherein said step of confirming and/or correcting the digital list, by the user, comprises editing the digital list, by means of the user device interface, to add and/or remove and/or correct the ingredients present in the list.

7. A method for identifying a list of recipes corresponding to a plurality of food ingredients, comprising:
- performing a method for preparing a digital list of ingredients according to any one of claims 1-6;
- associating, by electronic processing means, said definitive list of ingredients with one or more recipes containing one or more of the ingredients on said list;
- selecting and/or establishing a priority among said recipes based on a comparison of the number and/or quantity of ingredients in the recipe to the number and/or quantity of ingredients in the definitive list of ingredients.

8. A method according to claim 7, comprising the further steps of:
- providing the user, through the user device interface, with a list of recipes, comprising the selected and/or prioritized recipes;
- choosing, by the user, a recipe from the list of recipes by means of the interface of the user device;
- transmitting, through the user device, parameters associated with the chosen recipe to an apparatus configured to cook food,
and/or wherein said associating step comprises associating the definitive list of ingredients with one or more recipes stored in a recipe database accessible by the remote processing means,
and/or wherein the step of selecting and/or establishing a priority comprises selecting and/or establishing a higher priority for the stored recipes which have the greatest number of ingredients in common with the definitive list of ingredients.

9. A method according to claim 8, wherein the stored recipes comprise a main ingredient and a secondary ingredient and wherein said step of selecting and/or establishing a priority comprises:
- sorting the list of recipes by highlighting in first place, with the highest priority, the recipes for which both the primary and secondary ingredients are on the definitive list of ingredients, then putting in second place the recipes for which only the primary ingredient is on the definitive list of ingredients, putting in third place the recipes for which only the secondary ingredient is on the list, and finally putting, with the lowest priority, all the recipes for which there is an overlap between the ingredients in the recipe and the ingredients in the definitive list of ingredients,
and/or wherein the selected recipes provided to the user are sorted according to the established priority.

10. A method according to any one of claims 8-9, further comprising, before the step of providing the user with the list of recipes, the further step of filtering the recipes according to a predetermined criterion, generating a filtered list of recipes,
wherein said predetermined criterion is relative to the course and/or occasion and/or intolerance and/or cooking time and/or difficulty of realization, and wherein the providing step comprises providing the user with said filtered list of recipes.

11. A method of controlling a cooking apparatus for cooking food, comprising:
- performing a method for identifying a list of recipes corresponding to a plurality of food ingredients according to any one of claims 7-10;
- filtering the selected recipes provided to the user, based on cooking parameters and/or information on how to cook the recipe;
- choosing, by the user, a recipe from the list of recipes by means of the interface of the user device;
- transmitting, through the user device, parameters associated with the chosen recipe to the apparatus configured to cook food.

12. A method for using/controlling a refrigeration apparatus, comprising:
- performing a method for preparing a digital list of ingredients according to any one of claims 1-6;
- for every ingredient included in said definitive digital list of ingredients, determining, by a user device or remote processing means, based on information and/or correlations previously stored, a respective ideal position in a refrigerator compartment, adapted to allow optimal preservation;
- suggesting said determined ideal respective position to the user, by an interface of the user device;
- allowing the user, through the interface of the user device, to access a database in which the ingredients of the list and the respective position in the refrigerator are stored, so that the user can obtain information on what is stored in the refrigerator.

13. A method according to claim 12, further comprising the steps of:
- configuring the temperature of the refrigerator compartments based on the combinations of ingredients positioned therein;
- in the case of incompatibility, suggesting to the user to separate and place in different compartments ingredients whose positioning is mutually incompatible.

## Patentansprüche

1. Verfahren zum Herstellen einer digitalen Liste von Nährungsmittelbestandteilen basierend auf einer unterstützten Interaktion mit einem Benutzer, umfassend:
- Erfassen mindestens eines digitalen Videostreams von einer oder mehreren jeweiligen Nährungsmittelbestandteilen mittels einer Benutzervorrichtung;
- Interagieren mit dem mindestens einen digitalen Videostream durch den Benutzer mittels der Benutzervorrichtung, um in dem digitalen Videostream mindestens ein digitales Bild jeder der Nährungsmittelbestandteilen auszuwählen, die in die digitale Liste von Bestandteilen enthalten werden sollten;
- Erkennen, durch elektronische Verarbeitungsmittel, einer Vielzahl von Bestandteilen basierend auf mindestens einem jeweiligen digitalen Bild, das von dem Benutzer in dem digitalen Videostream ausgewählt wird;
- Vorbereiten, durch elektronische Verarbeitungsmittel, einer vorgeschlagenen digitalen Liste von Bestandteilen umfassend eine Liste von einer oder mehreren Bestandteilen, die mittels Bilderkennung erkannt werden;
- Bereitstellen der vorgeschlagenen digitalen Liste von Bestandteilen an den Benutzer über eine digitale Schnittstelle der Benutzervorrichtung;
- Bestätigen und/oder Korrigieren, durch den Benutzer, der vorgeschlagenen digitalen Liste von Bestandteilen über die digitale Schnittstelle der Benutzervorrichtung, um eine endgültige digitale Liste von Bestandteilen vorzubereiten,
wobei der Erfassungsschritt das Erfassen eines digitalen Videostreams umfasst, der in Echtzeit von dem Benutzer ausgearbeitet wird, wobei der Benutzer nacheinander eine Vielzahl von Bestandteilen ausarbeitet, die in die digitale Liste von Bestandteilen enthalten werden sollten,
wobei der Schritt des Interagierens mit dem digitalen Videostream umfasst:
- Unterstützen des Benutzers durch Überlagern, auf dem digitalen Video, Kästchen oder Frames oder Masken oder Zeichen, die Teile des Frames hervorheben, die den jeweiligen Bestandteilen zugeordnet sind;
- Anzeigen, durch den Benutzer, durch Auswählen der Kästchen oder Frames oder Masken oder Zeichen, der Teilen des Videostreams, die den zu erkennenden Bestandteilen entsprechen, sodass die digitalen Bilder der Bestandteile, die in die Liste von Bestandteilen enthalten werden sollten, ausgewählt werden,
wobei der Schritt des Unterstützens des Benutzers umfasst:
- Erkennen, durch einen Video/Bildanalysealgorithmus, Teile des Frames, die mit hoher Wahrscheinlichkeit Kandidat-Bestandteile darstellen;
- Unterstützen des Benutzers durch Überlagern, auf dem digitalen Video, der Kästchen oder Frames oder Masken oder hervorhebenden Zeichen auf den Teilen des Frames, die als wichtig erkannt werden;
wobei der Schritt des Erkennens der Frames durch die Benutzervorrichtung ausgeführt wird und der Video/Bildanalysealgorithmus mittels eines Software implementiert wird, das durch die Benutzervorrichtung ausgeführt wird, und/oder
wobei der Schritt des Erkennens Teile des Frames, die mit hoher Wahrscheinlichkeit Kandidat-Bestandteile darstellen, durch einen oder mehrere Video-/Bildanalysealgorithmen basierend auf Techniken der künstlichen Intelligenz und/oder trainierten Algorithmen und/oder maschinellem Lernen durchgeführt wird, wobei die Techniken der künstlichen Intelligenz und/oder die trainierten Algorithmen und/oder das maschinelle Lernen trainierte Algorithmen zur Objekterkennung in einem Bild umfassen.

2. Verfahren nach Anspruch 1, wobei der Schritt des Anzeigens umfasst:
- Identifizieren eines zu analysierenden Bereichs des Videoframes durch eine haptische Interaktion, durch den Benutzer, die geeignet ist, einen Bereich anzuzeigen, der einen Kandidat-Bestandteil enthält.

3. Verfahren nach einem der vorhergehenden Ansprüche, wobei der Schritt des Erkennens einer Vielzahl von Bestandteilen umfasst:
- Übermitteln an Fernverarbeitungsmittel die digitalen Bilder, die der Benutzer in dem digitalen Videostream ausgewählt hat;
- Durchführen auf jedem der digitalen Bilder eines Bilderkennungsverfahrens basierend auf Techniken der künstlichen Intelligenz und/oder trainierten Algorithmen und/oder maschinellem Lernen,
wobei die genannten Techniken und/oder die trainierten Algorithmen und/oder das maschinelle Lernen trainierte Algorithmen zur Objekterkennung aus Bildern umfassen,
und/oder die trainierten Algorithmen zur Objekterfassung und/oder Erkennung trainierte neuronale Netze umfassen.

4. Verfahren nach einem der vorhergehenden Ansprüche, ferner umfassend, nach dem Erkennungsschritt, den weiteren Schritt zum Schätzen der Menge von erkannten Bestandteilen, die in dem Bild vorhanden sind.

5. Verfahren nach einem der Ansprüche 1 bis 4 ferner umfassend den Schritt zum Übermitteln zusätzlicher Informationen an die elektronischen Fernverarbeitungsmittel über die Benutzervorrichtung, die dazu konfiguriert ist, mit den Fernverarbeitungsmitteln zu kommunizieren, wobei die zusätzlichen Informationen von dem Benutzer über die Schnittstelle der Benutzervorrichtung eingegeben werden,
wobei die zusätzlichen Informationen zusätzliche nicht ausgearbeitete Bestandteilen umfassen, die der Benutzer in die Liste enthalten möchte,
und/oder wobei die zusätzlichen Informationen über die ausgearbeiteten Bestandteilen Menge und/oder Produkt-Kennung und/oder Typ des ausgearbeiteten Bestandteils umfassen;
und/oder wobei die zusätzlichen Informationen von dem Benutzer über die Schnittstelle der Benutzervorrichtung eingegeben werden,
und/oder wobei die zusätzlichen Informationen in Form weiterer erfasster Bilder, z. B. Bilder einer Produktverpackung gesendet werden, wobei die weiteren erfassten Bilder z. B. mittels OCR verarbeitet werden, um lesbare Informationen über das Produkt und/oder die Produktverpackung zu erhalten.

6. Verfahren nach einem der vorhergehenden Ansprüche, wobei der Schritt des Bestätigens und/oder des Korrigierens der digitalen Liste durch den Benutzer Editieren der digitalen Liste mittels der Schnittstelle der Benutzervorrichtung umfasst, um Bestandteilen hinzuzufügen und/oder zu entfernen und/oder die Bestandteile, die in der Liste vorhanden sind, zu korrigieren.

7. Verfahren zum Identifizieren einer Liste von Rezepturen, die einer Vielzahl von Nährungsmittelbestandteilen entspricht, umfassend:
- Durchführen eines Verfahrens zum Herstellen einer digitalen Liste von Bestandteilen nach einem der Ansprüche 1 bis 6;
- Zuordnen, durch elektronische Verarbeitungsmittel, der endgültigen Liste von Bestandteilen einer oder mehreren Rezepturen, die eine oder mehrere der Bestandteile der Liste enthalten;
- Auswählen und/oder Festlegen einer Priorität unter den Rezepturen basierend auf einem Vergleich der Anzahl und/oder der Menge der Bestandteile in der Rezeptur mit der Anzahl und/oder der Menge der Bestandteile in der endgültigen Liste von Bestandteilen.

8. Verfahren nach Anspruch 7, umfassend die folgenden weiteren Schritte:
- Bereitstellen an den Benutzer, über die Schnittstelle der Benutzervorrichtung, eine Liste von Rezepturen, umfassend die ausgewählten und/oder priorisierten Rezepturen;
- Auswählen, durch den Benutzer, eine Rezeptur aus der Liste von Rezepturen über die Schnittstelle der Benutzervorrichtung;
- Übertragen, durch die Benutzervorrichtung, Parametern, die der ausgewählten Rezeptur zugeordnet sind, an eine Vorrichtung, die dazu konfiguriert ist, Nährungsmittel zu kochen,
und/oder wobei der Schritt des Zuordnens das Zuordnen der endgültigen Liste von Bestandteilen einer oder mehreren Rezepturen umfasst, die in einer Rezeptur-Datenbank gespeichert sind, die durch die Fernverarbeitungsmittel zugänglich ist,
und/oder wobei der Schritt des Auswählens und/oder des Priorisieren Auswählen und/oder Festlegen einer höheren Priorität für die gespeicherten Rezepturen umfasst, die die größte Anzahl von Bestandteilen gemeinsam mit der endgültigen Liste von Bestandteilen aufweisen.

9. Verfahren nach Anspruch 8, wobei die gespeicherten Rezepturen einen Hauptbestandteil und einen Nebenbestandteil umfassen und wobei der Schritt des Auswählens und/oder Priorisieren umfasst:
- Sortieren der Liste von Rezepturen, indem Rezepturen mit höchster Priorität an erster Stelle hervorgehoben werden, bei denen sowohl Haupt- als auch Nebenbestandteile in der endgültigen Liste von Bestandteilen enthalten sind, dann Rezepturen an zweiter Stelle gestellt werden, bei denen nur den Hauptbestandteil enthalten ist, Rezepturen an dritter Stelle gestellt werden, bei denen nur den Nebenbestandteil enthalten ist, und schließlich alle Rezepturen mit niedrigster Priorität gestellt werden, bei denen eine Überlappung zwischen den Bestandteilen in der Rezeptur und den Bestandteilen in der endgültigen Liste von Bestandteilen vorhanden ist,
und/oder wobei die ausgewählten Rezepturen, die von dem Benutzer bereitgestellt werden, nach der festgelegten Priorität sortiert werden.

10. Verfahren nach einem der Ansprüche 8 bis 9 ferner umfassend, vor dem Schritt des Bereitstellens der Liste von Rezepturen an den Benutzer, den weiteren Schritt des Filterns der Rezepturen nach einem vorbestimmten Kriterium, wobei eine gefilterte Liste von Rezepturen erstellt wird,
wobei das vorbestimmte Kriterium sich auf die Vorbereitung und/oder Begründung und/oder Unverträglichkeit und/oder Kochzeit und/oder Vorbereitungsschwierigkeit bezieht, und wobei der Bereitstellungsschritt Bereitstellen der gefilterten Liste von Rezepturen an den Benutzer umfasst.

11. Verfahren zum Steuern einer Kochvorrichtung zum Kochen Nährungsmittel, umfassend:
- Durchführen eines Verfahrens zum Identifizieren einer Liste von Rezepturen entsprechend einer Vielzahl von Nährungsmittelbestandteilen nach einem der Ansprüche 7 bis 10;
- Filtern der ausgewählten Rezepturen, die von dem Benutzer bereitgestellt werden, basierend auf Kochparametern und/oder Informationen, wie man die Rezeptur kochen muss;
- Auswählen, durch den Benutzer, einer Rezeptur aus der Liste von Rezepturen über die Schnittstelle der Benutzervorrichtung;
- Übertragen, durch die Benutzervorrichtung, Parameter, die der ausgewählten Rezeptur zugeordnet sind, an eine Vorrichtung, die dazu konfiguriert ist, Nährungsmittel zu kochen.

12. Verfahren zum Verwenden/Steuern einer Kühlvorrichtung, umfassend:
- Durchführen eines Verfahrens zum Herstellen einer digitalen Liste von Bestandteilen nach einem der Ansprüche 1 bis 6;
- Bestimmen für jeden Bestandteil, der in der endgültigen digitalen Liste von Bestandteilen enthalten ist, durch eine Benutzervorrichtung oder Fernverarbeitungsmittel, basierend auf Informationen und/oder Beziehungen, die zuvor gespeichert werden, einer jeweiligen Idealposition in einem Kühlschrankfach, das eingerichtet ist, eine optimale Aufbewahrung zu ermöglichen;
- Vorschlagen der bestimmten jeweiligen Idealposition an den Benutzer über eine Schnittstelle der Benutzervorrichtung;
- Ermöglichen dem Benutzer, über die Schnittstelle der Benutzervorrichtung, den Zugang auf eine Datenbank, in der die Bestandteile der Liste und die jeweilige Position in dem Kühlschrank gespeichert werden, damit der Benutzer Informationen über den Inhalt des Kühlschranks erhalten kann.

13. Verfahren nach Anspruch 12 ferner umfassend die folgenden Schritte:
- Konfigurieren der Temperatur der Kühlschrankfächer basierend auf die Kombinationen von Bestandteilen, die darin enthalten sind;
- Vorschlagen an den Benutzer, im Falle einer Unverträglichkeit, die Bestandteilen, deren Position miteinander unvereinbar ist, zu trennen und in verschiedene Fächer zu legen.

## Revendications

1. Procédé de préparation d'une liste numérique d'ingrédients alimentaires basé sur une interaction assistée avec un utilisateur, comprenant :
- l'acquisition d'au moins un flux vidéo numérique de un ou plusieurs ingrédients alimentaires respectifs au moyen d'un dispositif utilisateur ;
- l'interaction avec ledit au moins un flux vidéo numérique, par l'utilisateur au moyen du dispositif utilisateur, pour sélectionner dans le flux vidéo numérique au moins une image numérique de chacun desdits un ou plusieurs ingrédients alimentaires destinés à être inclus dans la liste numérique d'ingrédients ;
- la reconnaissance, par des moyens de traitement électronique, d'une pluralité d'ingrédients sur la base de ladite au moins une image numérique respective sélectionnée par l'utilisateur dans le flux vidéo numérique ;
- la préparation, par des moyens de traitement électronique, d'une liste numérique d'ingrédients suggérée, comprenant une liste d'un ou plusieurs ingrédients reconnus au moyen de la reconnaissance d'image ;
- la mise à disposition de ladite liste numérique d'ingrédients suggérée à l'utilisateur, via une interface numérique du dispositif utilisateur ;
- la confirmation et/ou la correction, par l'utilisateur, via ladite interface numérique du dispositif utilisateur, de ladite liste numérique d'ingrédients suggérée, afin de préparer une liste numérique définitive d'ingrédients,
dans lequel ladite étape d'acquisition comprend l'acquisition d'un flux vidéo numérique cadré en temps réel par l'utilisateur, dans lequel l'utilisateur cadre successivement une pluralité d'ingrédients destinés à être inclus dans la liste numérique d'ingrédients,
dans lequel l'étape d'interaction avec le flux vidéo numérique comprend :
- l'assistance à l'utilisateur par la superposition, sur la vidéo numérique, de boîtes ou cadres ou masques ou signes qui mettent en évidence des parties du cadre associées à des ingrédients respectifs ;
- l'indication, par l'utilisateur, par sélection desdites boîtes ou cadres ou masques ou signes, des parties du flux vidéo correspondant aux ingrédients à reconnaître, afin de sélectionner les images numériques des ingrédients à inclure dans la liste d'ingrédients,
dans lequel l'étape d'assistance à l'utilisateur comprend :
- la reconnaissance, par un algorithme d'analyse vidéo/image, de parties du cadre qui, avec une forte probabilité, représentent des ingrédients candidats ;
- l'assistance à l'utilisateur par la superposition, sur la vidéo numérique, desdites boîtes ou cadres ou masques ou signes de mise en évidence sur lesdites parties du cadre reconnues comme pertinentes ;
dans lequel ladite étape de reconnaissance des parties du cadre est réalisée par le dispositif utilisateur et ledit algorithme d'analyse vidéo/image est mis en œuvre au moyen d'un logiciel exécuté par le dispositif utilisateur, et/ou
dans lequel ladite étape de reconnaissance des parties de l'image qui, avec une forte probabilité, représentent des ingrédients candidats, est réalisée par un ou plusieurs algorithmes d'analyse vidéo/image, sur la base de techniques d'intelligence artificielle et/ou d'algorithmes entraînés et/ou d'apprentissage automatique, lesdites techniques d'intelligence artificielle et/ou lesdits algorithmes entraînés et/ou d'apprentissage automatique comprenant des algorithmes entraînés pour détecter des objets dans une image.

2. Procédé selon la revendication 1, dans lequel ladite étape d'indication comprend :
- l'identification d'une zone de l'image vidéo à analyser par une interaction haptique, par l'utilisateur, propre à indiquer une zone contenant un ingrédient candidat.

3. Procédé selon l'une quelconque des revendications précédentes, dans lequel l'étape de reconnaissance d'une pluralité d'ingrédients comprend :
- la transmission à des moyens de traitement à distance des images numériques que l'utilisateur a sélectionnées dans le flux vidéo numérique ;
- l'exécution sur chacune desdites images numériques d'une procédure de reconnaissance d'image sur la base de techniques d'intelligence artificielle et/ou d'algorithmes entraînés et/ou d'apprentissage automatique,
lesdites techniques d'intelligence artificielle et/ou lesdits algorithmes entraînés et/ou d'apprentissage automatique comprenant des algorithmes entraînés pour reconnaître des objets à partir d'images,
et/ou lesdits algorithmes entraînés de détection et/ou de reconnaissance d'objets d'image comprenant des réseaux neuronaux profonds entraînés.

4. Procédé selon l'une quelconque des revendications précédentes, comprenant en outre, après l'étape de reconnaissance, l'étape supplémentaire d'estimation de la quantité d'ingrédient reconnu présent dans l'image.

5. Procédé selon l'une quelconque des revendications 1 à 4, comprenant en outre l'étape de transmission d'informations supplémentaires aux moyens de traitement électronique à distance, via le dispositif utilisateur configuré pour communiquer avec lesdits moyens de traitement à distance, lesdites informations supplémentaires étant saisies par l'utilisateur via l'interface du dispositif utilisateur,
lesdites informations supplémentaires comprenant des ingrédients supplémentaires non cadrés que l'utilisateur souhaite inclure dans la liste,
et/ou lesdites informations supplémentaires relatives aux ingrédients cadrés comprenant la quantité et/ou l'identifiant du produit et/ou le type de l'ingrédient cadré ;
et/ou lesdites informations supplémentaires étant saisies par l'utilisateur via l'interface du dispositif utilisateur,
et/ou lesdites informations supplémentaires étant envoyées sous forme d'images supplémentaires acquises, par exemple des images d'un emballage de produit, lesdites images supplémentaires acquises étant traitées, par exemple, au moyen d'un OCR, pour déduire des informations lisibles sur le produit et/ou l'emballage du produit.

6. Procédé selon l'une quelconque des revendications précédentes, dans lequel ladite étape de confirmation et/ou de correction de la liste numérique, par l'utilisateur, comprend la modification de la liste numérique, au moyen de l'interface du dispositif utilisateur, pour ajouter et/ou supprimer et/ou corriger les ingrédients présents dans la liste.

7. Procédé d'identification d'une liste de recettes correspondant à une pluralité d'ingrédients alimentaires, comprenant :
- l'exécution d'un procédé de préparation d'une liste numérique d'ingrédients selon l'une quelconque des revendications 1 à 6 ;
- l'association, par des moyens de traitement électronique, de ladite liste définitive d'ingrédients à une ou plusieurs recettes contenant un ou plusieurs des ingrédients de ladite liste ;
- la sélection et/ou l'établissement d'une priorité parmi lesdites recettes sur la base d'une comparaison du nombre et/ou de la quantité d'ingrédients dans la recette avec le nombre et/ou la quantité d'ingrédients dans la liste définitive d'ingrédients.

8. Procédé selon la revendication 7, comprenant les étapes supplémentaires consistant à :
- mettre à disposition de l'utilisateur, via l'interface du dispositif utilisateur, une liste de recettes, comprenant les recettes sélectionnées et/ou hiérarchisées ;
- choisir, par l'utilisateur, une recette de la liste de recettes au moyen de l'interface du dispositif utilisateur ;
- transmettre, via le dispositif utilisateur, des paramètres associés à la recette choisie à un appareil configuré pour cuisiner des aliments,
et/ou dans lequel ladite étape d'association comprend l'association de la liste définitive d'ingrédients à une ou plusieurs recettes stockées dans une base de données de recettes accessible par les moyens de traitement à distance,
et/ou dans lequel l'étape de sélection et/ou d'établissement d'une priorité comprend la sélection et/ou l'établissement d'une priorité plus élevée pour les recettes stockées ayant le plus grand nombre d'ingrédients en commun avec la liste définitive d'ingrédients.

9. Procédé selon la revendication 8, dans lequel les recettes stockées comprennent un ingrédient principal et un ingrédient secondaire et dans lequel ladite étape de sélection et/ou d'établissement d'une priorité comprend :
- le tri de la liste de recettes en mettant en premier lieu, avec la plus haute priorité, les recettes pour lesquelles les ingrédients principal et secondaire sont présents dans la liste définitive d'ingrédients, puis en second lieu les recettes pour lesquelles seul l'ingrédient principal est présent dans la liste définitive d'ingrédients, en troisième lieu les recettes pour lesquelles seul l'ingrédient secondaire est présent dans la liste, et enfin, avec la priorité la plus basse, toutes les recettes pour lesquelles il existe un chevauchement entre les ingrédients de la recette et les ingrédients de la liste définitive d'ingrédients,
et/ou dans lequel les recettes sélectionnées fournies à l'utilisateur sont triées selon la priorité établie.

10. Procédé selon l'une quelconque des revendications 8 à 9, comprenant en outre, avant l'étape de mise à disposition de l'utilisateur de la liste de recettes, l'étape supplémentaire consistant à filtrer les recettes selon un critère prédéterminé, générant une liste filtrée de recettes,
dans lequel critère prédéterminé est relatif au type de plat et/ou à l'occasion et/ou à l'intolérance et/ou au temps de cuisson et/ou à la difficulté de réalisation, et dans lequel l'étape de mise à disposition comprend la fourniture à l'utilisateur de ladite liste filtrée de recettes.

11. Procédé de commande d'un appareil de cuisson pour la cuisson des aliments, comprenant :
- l'exécution d'un procédé d'identification d'une liste de recettes correspondant à une pluralité d'ingrédients alimentaires selon l'une quelconque des revendications 7 à 10 ;
- le filtrage des recettes sélectionnées fournies à l'utilisateur, sur la base de paramètres de cuisson et/ou d'informations sur la manière de cuire la recette ;
- le choix, par l'utilisateur, d'une recette de la liste de recettes au moyen de l'interface du dispositif utilisateur ;
- la transmission, via le dispositif utilisateur, de paramètres associés à la recette choisie à l'appareil configuré pour cuisiner des aliments.

12. Procédé d'utilisation/de commande d'un appareil de réfrigération, comprenant :
- l'exécution d'un procédé de préparation d'une liste numérique d'ingrédients selon l'une quelconque des revendications 1 à 6 ;
- pour chaque ingrédient inclus dans ladite liste numérique définitive d'ingrédients, la détermination, par un dispositif utilisateur ou des moyens de traitement à distance, sur la base d'informations et/ou de corrélations préalablement stockées, d'une position respective idéale dans un compartiment du réfrigérateur, adaptée à permettre une conservation optimale;
- la suggestion de ladite position respective idéale déterminée à l'utilisateur, par une interface du dispositif utilisateur ;
- la possibilité donnée à l'utilisateur, via l'interface du dispositif utilisateur, d'accéder à une base de données dans laquelle les ingrédients de la liste et la position respective dans le réfrigérateur sont stockés, afin que l'utilisateur puisse obtenir des informations sur ce qui est stocké dans le réfrigérateur.

13. Procédé selon la revendication 12, comprenant en outre les étapes consistant à :
- configurer la température des compartiments du réfrigérateur sur la base des combinaisons d'ingrédients qui y sont positionnés ;
- en cas d'incompatibilité, suggérer à l'utilisateur de séparer et de placer dans des compartiments différents les ingrédients dont le positionnement est mutuellement incompatible.
